(19) Europäisches Patentamt

European Patent Office

Office européen des brevets

(11) **EP 0 943 948 B1**

(12) **FASCICULE DE BREVET EUROPEEN**

(45) Date de publication et mention
de la délivrance du brevet:
**20.10.2004 Bulletin 2004/43**

(51) Int Cl.⁷: **G02B 7/28**, G02B 7/34

(21) Numéro de dépôt: **99400619.5**

(22) Date de dépôt: **12.03.1999**

(54) **Procédé d'alignement d'un objet avec un dispositif d'acquisition d'images et une optique de couplage**

Ausrichtungsverfahren von einem Objekt mit einer Bildaufnahmevorrichtung und einer Kopplungsoptik

Alignment procedure of an object with an image sensing device and a coupling optic

(84) Etats contractants désignés:
**DE GB IT**

(30) Priorité: **16.03.1998 FR 9803185**

(43) Date de publication de la demande:
**22.09.1999 Bulletin 1999/38**

(73) Titulaire: **COMMISSARIAT A L'ENERGIE ATOMIQUE**
**75015 Paris (FR)**

(72) Inventeur: **Guillemaud, Régis**
**38000 Grenoble (FR)**

(74) Mandataire: **Poulin, Gérard et al**
**Société BREVATOME**
**3, rue du Docteur Lancereaux**
**75008 Paris (FR)**

(56) Documents cités:
**US-A- 4 201 456**     **US-A- 4 500 189**
**US-A- 4 575 626**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Domaine de l'invention

L'invention concerne un procédé pour aligner, en vue d'une prise de vue de qualité, un objet dont on veut effectuer une prise de vue de qualité optimale avec une optique de couplage et un dispositif d'acquisition d'images.

L'invention trouve des applications dans tous les domaines relatifs à la création d'images de qualité optimum et, en particulier, dans le domaine de l'astronomie et dans le domaine médical, notamment pour des radiographies.

Etat de la technique

Dans le domaine de l'acquisition d'images, l'homme de l'art cherche à obtenir des images de la meilleure qualité possible, c'est-à-dire avec une bonne focalisation du système d'acquisition et une résolution d'image la meilleure possible.

Pour obtenir une image d'excellente qualité, le plan-image (c'est-à-dire le plan dans lequel se trouve le dispositif d'acquisition d'images) doit être parfaitement aligné, d'une part, avec l'optique de couplage et, d'autre part, avec l'objet. Or, cet alignement est difficile à réaliser car il faut régler l'orthogonalité du plan-image avec l'axe optique, ainsi que la distance focale.

Aussi, pour créer des images d'un objet sur un plan-image au travers d'une optique de soudage, il est nécessaire d'obtenir un positionnement optimum entre l'objet, l'optique et le plan-image. Ce positionnement optimum peut s'obtenir au moyen de réglages qui se font, classiquement, entre les positions de l'optique et du système d'acquisition (c'est-à-dire du plan-image), l'objet étant généralement positionné de manière fixe. Ces réglages sont de deux types :

- un réglage, à l'aide de rotations, de la perpendicularité du plan-image par rapport à l'axe optique de l'optique ; et
- un réglage de la position du plan-image (c'est-à-dire du système d'acquisition) par rapport à l'optique, ce qui correspond au réglage classique de la mise au point sur un appareil photographique. Ce réglage se fait par une translation, suivant l'axe de l'optique, et permet de focaliser le plan du dispositif d'acquisition, ou plan-image sur le plan-objet.

Classiquement, l'objet peut être à une distance variable de l'optique ; le réglage optique/plan-image peut donc se faire soit de façon approximative, soit visuellement par l'opérateur, grâce à des moyens de visée télémétrique ou reflex.

Certains dispositifs de prise d'images (ou dispositifs d'acquisition) sont munis d'un système de mesure de distance objet/optique qui détermine la distance entre l'objet et l'optique par une méthode ultrasonore ou infrarouge ; dans ce cas, le réglage optique/plan-image est réalisé automatiquement.

Cependant, dans ces dispositifs classiques, la profondeur de champ au niveau de l'optique est grande ; le réglage optique/plan-image n'est donc pas toujours précis.

Par ailleurs, il existe des applications dans lesquelles ce réglage optique plan-image est plus délicat, ce qui est le cas, par exemple, dans le domaine de la microscopie électronique. En effet, en microscopie électronique, l'opérateur peut réaliser le réglage optique/plan-image de façon visuelle ; il peut aussi le réaliser au moyen d'une technique dite de "wobber focusing aid". Cette technique est décrite notamment dans le document intitulé "the principles and practice of electron microscopy" de Ian M. WATT, dans Cambridge University Press, pages 29 à 31. Cette technique consiste à faire osciller un faisceau lumineux entre deux positions par rapport à la lentille du dispositif de prise d'images, ce qui produit une réponse double de l'objet étudié sur le plan-image, tant que le système n'est pas à l'optimum de sa focalisation.

Cependant, ces méthodes de wobbling sont difficiles à mettre en oeuvre car il n'est pas facile de dévier la source lumineuse.

Dans le domaine de l'astronomie, il est également utile d'avoir un réglage délicat, en particulier lorsque l'on utilise une caméra CCD en sortie d'une lunette astronomique, comme cela est décrit dans l'article "Une mission haute résolution au T 60" de J. DIJON et Al., dans la revue Pulsar n° 707, Mars-Avril 1995. Ce document décrit, en effet, une méthode permettant d'obtenir un réglage optique/plan-image relativement sensible. Cette méthode consiste à choisir une étoile unique, à placer devant l'entrée de la lunette astronomique un masque ayant deux trous et à vérifier le nombre de tâches lumineuse qui apparaissent sur la caméra CCD : si la caméra CCD est mal focalisée, par rapport à l'optique, alors deux tâches apparaissent sur la caméra ; par contre, si la focalisation est bonne, une seule tâche apparaît sur la caméra CCD. En déplaçant la projection de l'étoile sur les différentes régions de la caméra CCD, on peut ainsi régler l'alignement de l'ensemble optique/caméra CCD, c'est-à-dire l'alignement entre l'optique et le plan-image.

Cependant, cette méthode n'est applicable que pour un objet situé à l'infini, c'est-à-dire dans le cas particulier de l'astronomie.

D'autres méthodes optiques permettent d'effectuer le réglage de l'orthogonalité du plan-image avec l'axe optique. Une de ces méthodes consiste à utiliser une lunette autocollimatrice, placée en entrée de l'optique ; dans ce cas, il faut que le plan-image puisse fournir une réflexion pour ce type de réglage. En outre, des difficultés peuvent survenir lorsqu'il existe d'autres plans réfléchissant se trouvant sur la trajectoire entre l'optique et le plan-image, ce qui est le cas, lorsque l'on utilise une caméra CCD recouverte d'une fenêtre en verre.

Une telle méthode s'avère donc difficile à mettre en oeuvre. De plus, cette méthode fournit uniquement le réglage de planéité à effectuer ; elle ne donne en aucun cas le réglage de focalisation à effectuer pour obtenir l'alignement du système.

D'autres procédés de focalisation sont décrits dans les documents US 4,201,456 et US 4,500,189.

Exposé de l'invention

L'invention a justement pour but de remédier aux inconvénients des techniques décrites précédemment. A cette fin, elle propose un procédé permettant d'aligner un objet, dont on veut effectuer une prise de vue de qualité optimum, avec un dispositif d'acquisition d'images et avec une optique de couplage. Ce procédé consiste à utiliser une source lumineuse, positionnée à la place de l'objet et émettant des points lumineux, à travers un masque opaque percé d'au moins deux trous et à travers l'optique de couplage, en direction du dispositif d'acquisition et à vérifier, sur le plan-image du dispositif d'acquisition, si les images de ces points lumineux sont dédoublées.

De façon plus précise, l'invention concerne un procédé d'alignement d'un objet à mettre en image avec un dispositif d'acquisition d'images et une optique de couplage tel que défini dans la revendication 1.

Avantageusement, les paramètres de réglage comprennent un paramètre de translation et deux paramètres de rotation, mobiles suivant une direction parallèle à l'axe optique de l'optique de couplage.

Les paramètres de réglage peuvent aussi comprendre un quatrième paramètre relatif à la translation globale du plan-image suivant l'axe optique.

Selon un mode de réalisation de l'invention, le procédé consiste à émettre trois points lumineux et à effectuer au moins quatre acquisitions d'images de ces points lumineux, pour quatre réglages d'alignement différents.

Selon un autre mode de réalisation de l'invention, le procédé consiste, lorsque le nombre de points lumineux est supérieur à 3, à choisir, au préalable, ceux des points lumineux qui devront être pris en compte dans les étapes suivantes du procédé de l'invention.

Brève description des figures

- La figure 1 représente schématiquement le trajet optique des points lumineux depuis le plan-objet jusqu'au plan-image ;
- la figure 2 représente le diagramme fonctionnel du procédé de l'invention, dans un premier mode de réalisation ; et
- la figure 3 représente le diagramme fonctionnel du procédé de l'invention, dans un second mode de réalisation.

Description détaillée de modes de réalisation de l'invention

L'invention concerne un procédé permettant d'aligner précisément un objet dont on veut effectuer des prises de vues, avec un dispositif d'acquisition d'images et une optique de couplage.

Pendant toute la description qui va suivre, il sera question de " plan-image" et de "plan-objet" :

- le plan-image, référencé Pi sur les figures, est le plan dans lequel se forme l'image de l'objet sur le dispositif de prise de vue (ou dispositif d'acquisition d'images) ;
- le plan-objet, noté Po sur les figures, est le plan dans lequel se trouve l'objet au moment de la prise de vue. Il est à noter, toutefois, que le procédé qui permet de réaliser l'alignement de ces éléments est mis en oeuvre en l'absence de l'objet. En effet, aucun objet n'est nécessaire pour réaliser l'alignement ; seul le plan-objet, c'est-à-dire le plan dans lequel sera l'objet au moment de la prise de vue, est utile pour la mise en oeuvre du procédé. Pendant la réalisation de l'alignement, le plan-objet est défini, soit virtuellement, soit matériellement par le support sur lequel sera posé l'objet ultérieurement, lors de la prise de vue.

Il est à noter, par ailleurs, que pendant toute la mise en oeuvre du procédé d'alignement, comme pendant la prise de vue elle-même, l'optique de couplage (appelée plus simplement "optique") focalise sur le plan-objet.

Selon le procédé de l'invention, l'alignement du système d'acquisition (c'est-à-dire l'objet, l'optique de couplage et le dispositif d'acquisition) est obtenu successivement grâce à plusieurs images de points lumineux émis par une source lumineuse, à travers un masque opaque percé d'au moins deux trous tel que celui décrit dans la demande de brevet déposée ce jour par la demanderesse et intitulée « système de détermination et de quantification de l'alignement d'un objet avec une optique de couplage et un dispositif de prise de vues ». L'image de chacun de ces points lumineux est soit un point unique, auquel cas on considère que l'alignement du système d'acquisition est réalisé, soit un point dédoublé, auquel cas on considère qu'il n'y a pas alignement du système. Dans ce dernier cas, le procédé de l'invention consiste, à partir de la distance séparant les deux points (ou taches) d'un point dédoublé, à déterminer le réglage optimum des éléments du système les uns par rapport aux autres (à savoir l'optique de couplage, le plan-objet, et le dispositif d'acquisition d'images).

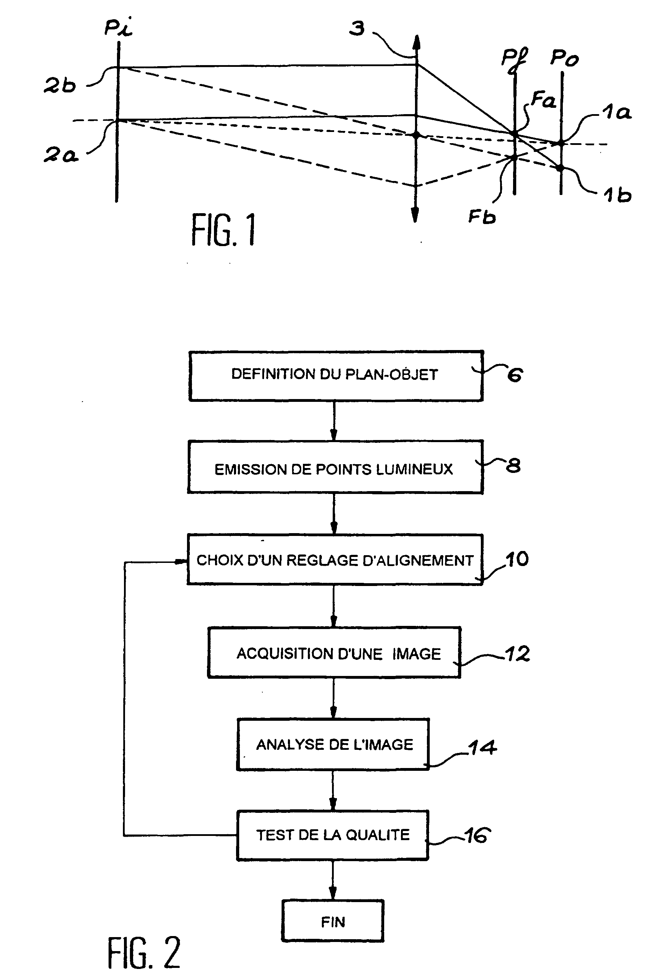

Pour une meilleure compréhension du procédé de l'invention, on a représenté, sur la figure 1, le trajet optique de deux points lumineux 1a et 1b émis par la source lumineuse. Ces deux points lumineux 1a et 1b se projettent en 2a et 2b sur le plan-image Pi, c'est-à-dire sur le dispositif d'acquisition d'images, après un trajet optique à travers l'optique de couplage 3.

L'exemple représenté sur cette figure 1 montre un système d'acquisition aligné, c'est-à-dire un système dans lequel le dispositif d'acquisition d'image est aligné avec l'optique 3 et avec le plan-objet Po représenté, pendant le procédé d'alignement, avec la source lumineuse. L'alignement est correct parce que les rayons issus de chaque point la et 1b du plan objet convergent vers un point unique du plan image 2a et 2b. Par ailleurs, on constate sur cette figure 1, que les rayons lumineux incidents, parallèles à l'axe optique de l'optique de couplage 3, représentés en traits pleins, passent tous par le point focal Fa. Il est à noter aussi que les rayons incidents obliques et parallèles entre eux, représentés en pointillés sur la figure 1, passent par un autre point focal unique Fb. Ainsi, à chaque point focal Fa et Fb du plan-focal Pf, correspond une direction de rayons incidents.

Considérons maintenant le point lumineux la qui passe par les points focaux Fa et Fb. Si le dispositif d'acquisition 2 est placé correctement par rapport à l'optique de couplage 3 et au plan-objet Po, c'est-à-dire si ces trois éléments sont alignés, alors l'image du point lumineux la est le point 2a. Cette image du point lumineux est un point unique.

Par contre, si le dispositif d'acquisition est défocalisé, c'est-à-dire s'il n'y a pas alignement de ces trois éléments, alors l'image du point lumineux la sera un ensemble de deux points (ou taches) sur le dispositif d'acquisition, c'est-à-dire un point dédoublé. Dans ce cas, la distance entre les deux taches du point dédoublé sera proportionnelle à la distance de focalisation du dispositif d'acquisition. C'est à partir de cette distance et d'au moins deux autres distances, déterminées de façon identique pour des réglages différents du système, que sera déterminé le réglage optimum du système et, en particulier, la position de focalisation optimum du dispositif d'acquisition.

Autrement dit, le procédé de l'invention cherche à caractériser et étalonner la distance entre deux taches, images d'un même point lumineux, en fonction de la focalisation du dispositif d'acquisition, et cela lorsque le dispositif d'acquisition, l'optique de couplage et le plan-objet sont bien définis.

En d'autres termes, si l'on appelle Dpoint, la distance entre les deux taches d'un point double et Doptique, la distance entre l'optique et le dispositif d'acquisition, alors on a l'équation :

$$Dpoint = a^* \, Doptique + b,$$

cette fonction s'annulant lorsque la focalisation optimum du dispositif d'acquisition a été déterminée.

Le procédé d'alignement de l'invention consiste, tout d'abord, en une étape 6 de définition d'un plan-objet en choisissant l'emplacement où sera, par la suite, positionné l'objet à mettre en image et où doit être positionnée, pendant la mise en oeuvre du procédé, la source de points lumineux.

Le procédé consiste ensuite à émettre des points lumineux dans le plan-objet, en direction du plan-image (étape 8). Ces points lumineux sont au minimum au nombre de trois. Avantageusement, les points lumineux sont en nombre supérieur à trois, ce qui assure à la fois une bonne précision du procédé et un temps de traitement relativement court.

Les étapes suivantes du procédé de l'invention peuvent être réalisées selon deux modes de réalisation différents.

Le premier mode de réalisation est représenté schématiquement sur la figure 2.

Selon ce premier mode de réalisation, les étapes suivantes du procédé sont effectuées de façon itérative. Dans ce mode de réalisation, le procédé comporte, tout d'abord, une étape 10 de choix d'un réglage d'alignement. Un "réglage d'alignement" concerne, d'une part, la focalisation du dispositif d'acquisition, et, d'autre part, le positionnement de l'optique de couplage et le positionnement du dispositif d'acquisition, le positionnement du plan-objet étant défini au début du procédé et restant fixe pour la suite du procédé ainsi que pour les prises de vues de l'objet.

Ainsi, le réglage du système se fait par :

- des rotations pour régler la planéité du dispositif d'acquisition par rapport à l'optique de couplage ; et
- une translation selon l'axe de l'optique pour régler la focalisation.

Lors de la première itération, ce réglage est choisi de façon arbitraire. Par la suite, le choix du réglage est effectué en fonction des informations recueillies à la fin des itérations précédentes (c'est-à-dire à l'étape 16) en fonction de la qualité de l'alignement obtenu.

Le procédé se poursuit par une étape 12 qui consiste à effectuer l'acquisition de l'image de ces points lumineux, sur le plan-image, pour le réglage d'alignement choisi à l'étape 10.

Une étape 14 consiste ensuite à effectuer l'analyse de l'image de ces points. C'est au cours de cette analyse que l'on détermine si l'image d'un point lumineux est simple ou double ; si cette image est double, la distance entre les deux images du point lumineux, c'est-à-dire entre les deux taches constituant le point double, est calculée de façon à en déduire le réglage à effectuer sur les éléments du système pour améliorer leur alignement.

Une étape 16 consiste ensuite à vérifier, par un test de qualité, la qualité de l'alignement obtenu à partir de l'étape d'analyse 14. Si cette qualité est correcte alors on considère que l'on a obtenu le réglage optimum, c'est-à-dire le réglage pour lequel les distances entre les images de points lumineux sont minimales.

Dans le cas contraire, le procédé est réitéré à partir de l'étape 10, pendant laquelle un nouveau réglage d'alignement est choisi en fonction du résultat du test de qualité 16.

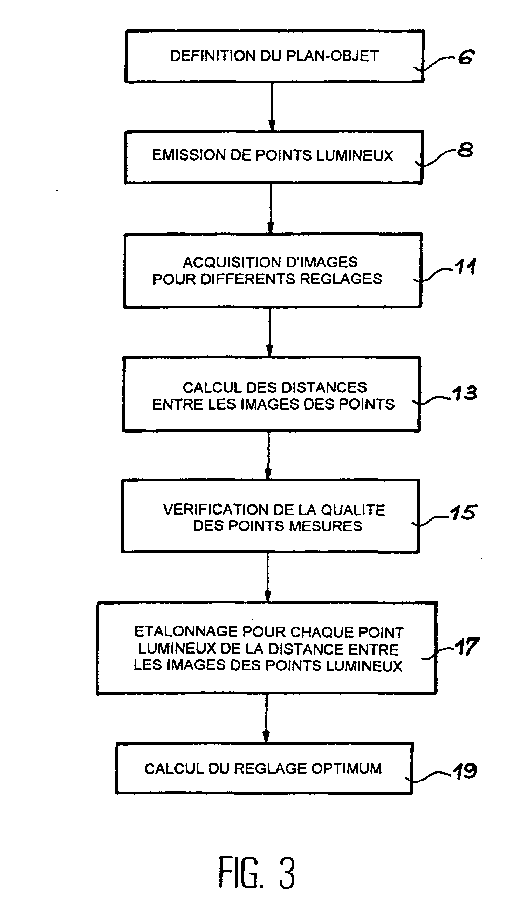

Sur la figure 3, on a représenté schématiquement le procédé de l'invention, selon le second mode de réalisation. Outre l'étape 6 de définition du plan-objet et l'étape 8 d'émission des points lumineux dans le plan-objet, le procédé de l'invention comporte une étape 11 d'acquisition des images des points lumineux (ou taches lumineuses) par le dispositif d'acquisition. Selon ce mode de réalisation de l'invention, une image de chacun de ces points lumineux est réalisée pour chaque réglage du système. Ces acquisitions d'images se font pour différents réglages d'alignement simultanément ou successivement.

Le procédé de l'invention comporte ensuite une étape 13 qui consiste à calculer les distances entre les images des points lumineux, c'est-à-dire entre les taches d'impact de chaque point lumineux, lorsque la tache est dédoublée. Ce calcul peut se faire de différentes façons ; par exemple, on peut définir, pour chaque point lumineux du plan-objet, une sous-image dans le dispositif d'acquisition dans laquelle l'image du point lumineux va se projeter. Ensuite, le positionnement des taches lumineuses peut se faire, par exemple, par un calcul du centre de gravité de chacune des taches.

Une autre méthode de calcul consiste à estimer une gaussienne sur chacune des taches, ce qui permet de modéliser au mieux la distribution des niveaux de gris dans la sous-image contenant les images. Cette estimation peut se faire à l'aide d'un algorithme de type Expectation Maximisation défini, par exemple, dans l'article "Parameter Estimation and Tissue Segmentation from Multispectral MR Images", de Z. LIANG et Al., IEEE Trans. Med. Im, vol. 13, n° 3, Septembre 1994.

Le procédé de l'invention peut ensuite comporter une étape 15 de vérification de la qualité des points mesurés. Cette étape n'est pas nécessaire à la bonne réalisation du procédé mais elle permet d'améliorer la qualité du résultat. Cette étape consiste à vérifier que le comportement des différents points lumineux est cohérent. Par exemple, si l'on a effectué, dans l'étape 11, deux ou trois réglages en translation, l'étape 15 consiste à s'assurer que le comportement est le même pour tous les points lumineux ; ainsi, les points lumineux qui pourraient apparaître aberrants lors de cette étape, sont supprimés et ne sont pas utilisés dans les étapes suivantes.

Le procédé consiste ensuite en une étape 17 d'étalonnage, pour chacun des points lumineux. Cette étape 17 fournit les informations nécessaires à la détermination, dans l'étape 19, du réglage d'alignement optimum pour le système. Le calcul du réglage optimum correspond, en fait, à une minimisation de l'ensemble des distances entre les images des points lumineux par rapport au paramètre de réglage d'alignement du plan-image.

Les étapes 17 et 19 peuvent être mises en oeuvre par des méthodes mathématiques qui vont être décrites ultérieurement. En particulier, les étapes 17 et 19 correspondent chacune à la résolution d'un système inverse.

Il est à noter que le plan-image du dispositif d'acquisition est constitué d'un plan défini par trois points de réglage. La focalisation optimum de ce dispositif d'acquisition est obtenue lorsque ce plan est, d'une part, perpendiculaire à l'axe optique et, d'autre part, à la bonne distance de focalisation. Le réglage de la position du plan se fait donc par le positionnement des trois points de réglage qui le définissent.

Ainsi, la position de ces trois points de réglage définit la transformation utile au réglage du système, ce qui revient à dire que ces trois points paramétrisent la translation et les rotations utiles à l'alignement du système. De préférence, ces trois points sont mobiles suivant une direction parallèle à l'axe optique et la paramétrisation de ces points se fait par définition de la position sur la droite d'évolution du système ; cette droite d'évolution est avantageusement parallèle à l'axe optique de la lentille. Une origine est définie de façon arbitraire sur chacune des droites et reste fixe durant l'alignement.

Pour chaque point lumineux de la source lumineuse, on définit une distance des points qui est la distance entre les deux tâches, images des points lumineux sur le dispositif d'acquisition ; on note D1, D2 et D3, les positions des points de réglage sur l'axe de déplacement du système ; il existe alors une relation linéaire :

$$\text{Dpoint} = a1{*}D1 + a2{*}D2 + a3{*}D3 + b.$$

Pour chaque point lumineux, on peut donc calculer l'étalonnage de la fonction de distance Dpoint en fonction des valeurs de D1, D2 et D3. Pour cela, on utilise les différentes acquisitions d'images, réalisées pour des réglages différents, une distance $\text{Dpoint}_i$ étant associée à chacun de ces réglages. On a donc le système d'équation suivant :

$$\text{Dpoint}_1 = a1{*}D1_1 + a2{*}D2_1 + a3{*}D3_1 + b$$

$$\text{Dpoint}_2 = a1{*}D1_2 + a2{*}D2_2 + a3{*}D3_2 + b$$

$$\cdots$$

$$\text{Dpoint}_n = a1{*}D1_n + a2{*}D2_n + a3{*}D3_n + b,$$

dans lequel les inconnues sont a1, a2, a3 et b.

Ce système peut être inversé par des méthodes mathématiques connues, telles que la fonction pseudo-inverse du logiciel MATHEMATICA® ou par les méthodes décrites dans : "Numerical Recipes, The Art of Scientific Computing", W.H. PRESS et al., Cambridge University Press, pages 52-60.. Il est à noter, toutefois, que pour trouver une solution à ce système, il est nécessaire que la série de réglages comporte au moins trois réglages linéairement indépendants.

Après un étalonnage pour l'ensemble de ces points, on obtient donc les équations suivantes :

$$Dpoint_{pt1} = a1_{pt1}*D1 + a2_{pt1}*D2 + a3_{pt1}*D3 + b_{pt1}$$

$$Dpoint_{pt2} = a1_{pt2}*D1 + a2_{pt2}*D2 + a3_{pt2}*D3 + b_{pt1}$$

$$. . .$$

$$Dpoint_{ptn} = a1_{ptn}*D1 + a2_{ptn}*D2 + a3_{ptn}*D3 + b_{pt1}$$

Dans ce système, les variables sont Dpoint, D1, D2 et D3.

La solution optimum de ce système correspond à une distance Dpoint égale à 0, pour tous les points lumineux utilisés pour la mise en oeuvre du procédé (Dpoint=0 correspondant à aucun dédoublement des images des points lumineux).

Comme on l'a vu précédemment, le réglage du système se fait par des rotations pour régler la planéité du dispositif d'acquisition par rapport à l'optique de couplage et par une translation selon l'axe de l'optique de couplage pour régler la focalisation du dispositif d'acquisition. Toutefois, dans ce second mode de réalisation de l'invention, cet ensemble de rotations et de translation est paramétré par la position des trois points de réglage définissant le plan-image. Ainsi, un mouvement identique des trois points de réglage permet de réaliser une translation et des réglages différents selon les trois points de réglage permettent de réaliser des rotations.

Selon une variante de l'invention, le positionnement du dispositif d'acquisition peut être défini par un quatrième paramètre ; ce paramètre est une translation globale du plan-image suivant l'axe optique, ce qui équivaut, en fait, à un réglage direct de focalisation de l'optique. Dans cette variante, le quatrième paramètre est noté D4 et la relation linéaire est de la forme suivante :

$$Dpoint = a1*D1 + a2*D2 + a3*D3 + a4*D4 + b$$

La méthode de recherche du réglage optimum est équivalente à celle du mode de réalisation qui vient d'être décrit avec, cependant, cinq acquisitions d'images pour cinq réglages d'alignements différents.

Lorsque le nombre de points lumineux émis par la source lumineuse est important, le procédé de l'invention peut comporter une étape supplémentaire qui consiste à choisir, parmi ces points lumineux, ceux qui seront utilisés pour la mise en oeuvre du procédé. Cette étape est réalisée juste après l'étape 8 d'émission des points lumineux.

Afin d'assurer une meilleure résolution des systèmes, lors de l'étape 19 de calcul du réglage optimum, un traitement supplémentaire peut être effectué :

- dans les acquisitions d'images effectuées pendant l'étape 11, une série d'acquisitions d'images appelées "SP" est faite pour des variations de réglage identiques, appelées "VD", sur tous les coefficients de réglage D1, D2 et D3, ce qui correspond à des translations suivant l'axe optique ;
- dans une sous-étape, située entre l'étape 11 et l'étape 13, on vérifie si toutes les variations d'écartement des taches, pour la série d'acquisition d'images SP, sont faibles. Pour les points lumineux correspondant à des variations d'écartement faibles, on calcule une variation d'écartement moyen $\Delta D$ pour chaque variation du réglage VD, à savoir : const = moyenne($\Delta D/VD$) ;
- on peut alors ajouter, dans la résolution du système, la contrainte suivante :

$$a1 + a2 + a3 = const.$$

## Revendications

**1.** Procédé d'alignement d'un objet à mettre en image avec un dispositif d'acquisition d'image et une optique de couplage, le procédé étant mis en oeuvre en l'absence de l'objet, **caractérisé en ce qu'**il consiste à :

- définir un plan-objet (6) ;
- émettre au moins trois points lumineux (1a, 1b) dans le plan-objet (Po) ;
- placer un masque opaque percé d'au moins deux trous dans le chemin optique ;
- effectuer (10-12) une pluralité d'acquisitions d'images de ces points lumineux, chaque acquisition d'image étant réalisée pour un réglage d'alignement différent dont les paramètres de réglage sont connus ;
- établir, pour chaque point lumineux et pour chaque réglage d'alignement, une liste de distances entre les images des points lumineux sur le plan-image défini par le dispositif d'acquisition ;
- déterminer, pour chaque point lumineux et pour chaque réglage d'alignement, une fonction d'évolution de la distance entre points lumineux ; et
- à partir de toutes les fonctions d'évolution déterminées pour les différents réglages d'alignement, déterminer un réglage particulier pour lequel les distances entre les images des points lumineux sont minimales et correspondant au réglage de focalisation et d'orthogonalité du plan-image par rapport à l'axe optique de l'optique de couplage.

2. Procédé selon la revendication 1, **caractérisé en ce que** les paramètres de réglage comprennent un paramètre de translation et deux paramètres de rotation, mobiles suivant une direction parallèle à l'axe optique de l'optique de couplage.

3. Procédé selon la revendication 2, **caractérisé en ce que** les paramètres de réglage comprennent un quatrième paramètre relatif à la translation globale du plan-image suivant l'axe optique.

4. Procédé selon l'une quelconque des revendications 1 à 3, **caractérisé en ce qu'**il consiste à émettre trois points lumineux et à effectuer au moins quatre acquisitions d'images de ces points lumineux pour des réglages d'alignement différents.

5. Procédé selon l'une quelconque des revendications 1 à 3, **caractérisé en ce qu'**il consiste, lorsque le nombre de points lumineux est important, à choisir, au préalable, ceux des points lumineux qui seront pris en compte dans les étapes suivantes.

**Patentansprüche**

1. Ausrichtungsvertahren eines mit einer Bilderfassungsvorrichtung und einer Kopplungsoptik abzubildenden Objekts, wobei das Verfahren ohne das Objekt durchgeführt wird,
**dadurch gekennzeichnet, dass** es darin besteht:

- eine Objektebene (6) zu definieren;
- wenigstens drei Lichtpunkten (1a, 1b) in die Objektebene (Po) zu senden;
- eine opake Maske mit wenigstens zwei Löchern in dem optischen Weg zu platzieren;
- eine Vielzahl Bildertassungen dieser Lichtpunkte durchzuführen (10-12), wobei jede Bilderfassung mit einer anderen bzw. unterschiedlichen Ausrichtungseinstellung durchgeführt wird, deren Einstellungsparameter bekannt sind;
- eine jeden Lichtpunkt und jede Ausrichtungseinstellung umfassende Liste der durch die Erfassungsvorrichtung definierten Abstände zwischen den Bildern der Lichtpunkte in der Bildebene zu erstellen;
- für jeden Lichtpunkt und für jede Ausrichtungseinstellung eine Entwicklungsfunktion des Abstands zwischen Lichtpunkten zu bestimmen; und
- aufgrund aller für die unterschiedlichen Ausrichtungseinstellungen bestimmten Entwicklungsfunktionen eine besondere Einstellung zu bestimmen, bei der die Abstände zwischen den Bildern der Lichtpunkte minimal sind und der Fokussierungs- und Rechtwinkligkeitseinstellung der Bildebene in Bezug auf die optische Achse der Kopplungsoptik entsprechen.

2. Verfahren nach Anspruch 1, **dadurch gekennzeichnet, dass** die Einstellungsparameter einen Translationsparameter und zwei Rotationsparameter umfassen, mobil in einer zu der optischen Achse der Kopplungsoptik parallelen Richtung.

3. Verfahren nach Anspruch 2, **dadurch gekennzeichnet, dass** die Einstellungsparameter einen die globale Translation der Bildebene entsprechend der optischen Achse betreffenden vierten Parameter umfassen.

4. Verfahren nach einem der Ansprüche 1 bis 3, **dadurch gekennzeichnet, dass** es darin besteht, drei Lichtpunkte auszusenden und wenigstens vier Bilderfassungen dieser Lichtpunkte mit unterschiedlichen Ausrichtungseinstellungen durchzuführen.

5. Verfahren nach einem der Ansprüche 1 bis 3, **dadurch gekennzeichnet, dass** es, wenn die Anzahl der Lichtpunkte groß ist, darin besteht, im Voraus diejenigen der Lichtpunkte auszuwählen, die in den nachfolgenden Schritten berücksichtigt werden.

**Claims**

1. Method for aligning an object whose image is to be recorded with an image capture apparatus and a coupling eyepiece, said method being implemented in the absence of the object,
**characterized in that** it consists in:

- defining an object plane (6);
- emitting at least three luminous dots (1a, 1b) in the object plane (Po);
- positioning an opaque mask perforated with at least two holes in the optical path;
- effecting (10-12) a plurality of image captures of the luminous dots, each capture being made for a different alignment setting whose parameters are known;
- establishing for each luminous dot and each alignment setting a list of distances between the images of the luminous dots on the image plane defined by the capture apparatus;
- determining a development function of the distance between the luminous dots for each luminous dot and each alignment setting; and
- determining a particular setting for which the distances between the images of the luminous dots are minimal using all the development functions for the various alignment settings and corresponding to the focusing setting and orthogonality of the image plane with respect to the optical axis of the coupling eyepiece.

2. Method according to claim 1, **characterized in that** the setting parameters comprise a translation movement parameter and two rotation parameters that move in a direction parallel to the optical axis of the coupling eyepiece.

3. Method according to claim 2, **characterized in that** the setting parameters comprise a fourth parameter relative to the overall translation movement of the image plane along the optical axis.

4. Method according to any one of the claims 1 to 3, **characterized in that** it consists in emitting three luminous dots and effecting at least four image captures of said luminous dots for different alignment settings.

5. Method according to any one of the claims 1 to 3, **characterized in that**, where a large number of luminous dots are used, pre-selecting the luminous dots to be used in the subsequent stages.

FIG. 1

DEFINITION DU PLAN-OBJET — 6

EMISSION DE POINTS LUMINEUX — 8

CHOIX D'UN REGLAGE D'ALIGNEMENT — 10

ACQUISITION D'UNE IMAGE — 12

ANALYSE DE L'IMAGE — 14

TEST DE LA QUALITE — 16

FIN

FIG. 2

DEFINITION DU PLAN-OBJET — 6

EMISSION DE POINTS LUMINEUX — 8

ACQUISITION D'IMAGES
POUR DIFFERENTS REGLAGES — 11

CALCUL DES DISTANCES
ENTRE LES IMAGES DES POINTS — 13

VERIFICATION DE LA QUALITE
DES POINTS MESURES — 15

ETALONNAGE POUR CHAQUE POINT
LUMINEUX DE LA DISTANCE ENTRE
LES IMAGES DES POINTS LUMINEUX — 17

CALCUL DU REGLAGE OPTIMUM — 19

FIG. 3